# EUROPEAN PATENT SPECIFICATION

(11) **EP 4 152 297 B1**
(45) Date of publication and mention of the grant of the patent: **06.11.2024**
(21) Application number: 22195478.7
(22) Date of filing: 13.09.2022
(51) Int. Cl.: G08G 5/00

(54) **SYSTEMS AND METHODS FOR MULTI-SENSOR CORRELATION OF AIRSPACE SURVEILLANCE DATA**
SYSTEME UND VERFAHREN ZUR MULTISENSORKORRELATION VON LUFTRAUMÜBERWACHUNGSDATEN
SYSTÈMES ET PROCÉDÉS DE CORRÉLATION MULTI-CAPTEURS DE DONNÉES DE SURVEILLANCE D'ESPACE AÉRIEN

(30) Priority: 16.09.2021 US 202117476931
(43) Date of publication of application: 22.03.2023
(73) Proprietor: GE Aviation Systems LLC, Grand Rapids, MI 49512 (US)
(72) Inventor: MENON, Anup, Grand Rapids, 49512 (US)
(74) Representative: Openshaw & Co.

(56) References cited:
- EP-A1- 3 798 907
- US-A1- 2017 278 410
- NAZARI MOUSA ET AL: "An Adaptive Density-Based Fuzzy Clustering Track Association for Distributed Tracking System", IEEE ACCESS, vol. 7, 12 September 2019 (2019-09-12), pages 135972 - 135981, XP011747877, DOI: 10.1109/ACCESS.2019.2941184
- LIANG NIVEN SIE JUN ET AL: "Multi-camera multi-target drone tracking systems with trajectory-based target matching and re-identification", 2021 INTERNATIONAL CONFERENCE ON UNMANNED AIRCRAFT SYSTEMS (ICUAS), IEEE, 15 June 2021 (2021-06-15), pages 1337 - 1344, XP033942307, DOI: 10.1109/ICUAS51884.2021.9476845

## Description

### FIELD

The present disclosure relates to monitoring of aerial vehicles, and more specifically, to systems and methods for multi-sensor correlation of airspace surveillance data.

### BACKGROUND

Air traffic control systems and unmanned traffic management systems monitor aerial vehicles that utilize airspace. A variety of different instruments, sensors, or other monitoring systems may be used simultaneously to track objects (e.g., aerial vehicles). Each sensor may track objects independently. As such, a particular object may be detected by multiple sensors. However, due to measurement uncertainty, instrument error, or other factors, different sensors may report the position of the same object differently. Thus, the actual position of the object may be unclear. Therefore, there is a need for systems and methods to correlate airspace surveillance data from multiple sensors. LIANG NIVEN SIE JUN ET AL, "Multi-camera multi-target drone tracking systems with trajectory-based target matching and re-identification", 2021 INTERNATIONAL CONFERENCE ON UNMANNED AIRCRAFT SYSTEMS (ICUAS), IEEE, (20210615), doi:10.1109/ICUAS51884.2021.9476845, pages 1337 - 1344, XP033942307 discloses the use of multiple cameras to detect, track and localize multiple moving objects, with the ability to use multiple cameras from different viewing angles and simultaneously track moving objects in the cameras' frames. NAZARI MOUSA ET AL: "An Adaptive Density-Based Fuzzy Clustering Track Association for Distributed Tracking System", IEEE ACCESS, vol. 7, published 12 September 2019, DOI: 10.1109/ACCESS.2019.2941184, pages 135972-135981, XP011747877, discloses a low computational overhead density-based fuzzy clustering method for solving the track-to-track association problem in distributed multi-sensor tracking systems. The method gets tracks of targets from different sensors, combines them at a fusion center and then relates them. After that, it uses prior estimated state of each target as basis for determining fuzzy membership of reported tracks of sensors that are related to a single target. The membership degree of each track to a cluster is determined based on the principle of maximum entropy. A weighted combinations of reported clustered tracks of a single target is applied to produce a fused target state.

### SUMMARY

The invention concerns a method and apparatus as set out in independent claims 1 and 8, respectively. Embodiments of the invention are defined as set out in dependent method claims 2-7 and apparatus claims 9 and 10.

These and other features, and characteristics of the present technology, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of 'a', 'an', and 'the' include plural referents unless the context clearly dictates otherwise.

### BRIEF DESCRIPTION OF THE DRAWINGS

FIG. 1 schematically depicts an exemplary system for correlating airspace surveillance data from multiple sensors, according to one or more embodiments shown and described herein;
FIG. 2 schematically depicts an example unmanned aircraft system service supplier, according to one or more embodiments shown and described herein;
FIG. 3 depicts a flow chart of an illustrative method of correlating airspace surveillance data from multiple sensors, according to one or more embodiments shown and described herein;
FIG. 4A depicts exemplary surveillance data from multiple sensors;
FIG. 4B depicts an example clustering of the surveillance data of FIG. 4A;
FIG. 4C depicts an example grouping of the clusters of FIG. 4B; and
FIG. 4D depicts an example of state estimate of tracks for two targets, according to one or more embodiments shown and described.

### DETAILED DESCRIPTION

The present disclosure generally relates to a system for correlating air surveillance data from multiple sensors. The present disclosure is directed to monitoring unmanned aircraft systems (UAS). However, it should be understood that, in other embodiments, the present disclosure may apply to monitoring manned aircraft system or any other airborne objects.

The ability to detect and avoid other aircraft is key to operation of a UAS. For scalable, beyond visual line of sight operations, this requires relying on sensors to perform airspace surveillance and report on proximate air traffic. Any detected targets or other air traffic may be displayed to a human operator of a UAS such that the human operator may gain situational awareness of the airspace and adjust the flight of the UAS accordingly. This airspace surveillance may be performed by a UAS service supplier (USS) or an unmanned traffic management (UTM) system.

A UTM system comprises one or more USS. A USS may manage UAS traffic within a certain geographic area and/or for a certain set of clients. A USS may monitor UAS with a plurality of sensors that gather air surveillance data, including ground based radar tracking using primary and/or secondary radar, and/or by receiving telemetry directly from UAS, that identifies their position. In addition to tracking the position of UAS, a USS may communicate with UAS operators to provide instructions to guide UAS along certain routes to avoid collisions with other UAS and to otherwise manage airspace.

While a single USS may cover a certain geographic area, a plurality of USS may be part of a UTM network to manage air traffic over a larger geographic area. Different USS that are part of a UTM network may communicate with each other to jointly manage UAS air traffic (e.g., one USS may monitor a particular UAS and may hand off control to another USS as the USS is leaving its airspace). In addition, multiple USS may cover overlapping geographic areas, in which case they may communicate with each other to jointly ensure aircraft separation.

When multiple sensors of a UTM monitor overlapping airspace, each sensor may detect a position of an object within the airspace. Furthermore, due to measurement error or uncertainty, instrument error, random noise, or other factors, each sensor may detect a different position for the same object. Accordingly, each sensor may report a different position of the object to the UTM monitoring the airspace. Thus, merely displaying data from all sensors can lead to a cluttered display causing confusion regarding the number and state of actual targets in the airspace. Accordingly, it is desirable to appropriately fuse surveillance data from multiple sensors to provide a combined air picture where each detected target is uniquely represented. Such fusion of sensor data is also helpful in providing algorithmic detect and avoid alerting and guidance.

Disclosed herein are systems and methods of fusing sensor data from multiple sensors to provide a combined air picture to a human operator of a UAS. As disclosed herein, a USS may receive surveillance data from multiple sensors that monitor air traffic. As disclosed herein, the USS may receive formed track data comprising a recent history of positions of targets detected by each sensor.

After receiving surveillance data comprising tracks of detected targets, the USS may aggregate the data from each track. This aggregated data may comprise positions of all targets detected within a threshold duration in the past. The USS may then use a clustering algorithm to perform density-based clustering to determine different clusters of the target positions of the aggregated data.

The USS may then determine a plurality of candidate track-to-cluster associations and rank the candidate associations based on the number of elements from each track in each cluster. The USS may then associate each track with a particular target based on the determined track-to-cluster associations. If multiple sensors have detected the same target, then some targets may be associated with multiple tracks. As such, the USS may estimate a single track for each target based on the tracks associated with each target. The single determined track for each target may then be presented to a user.

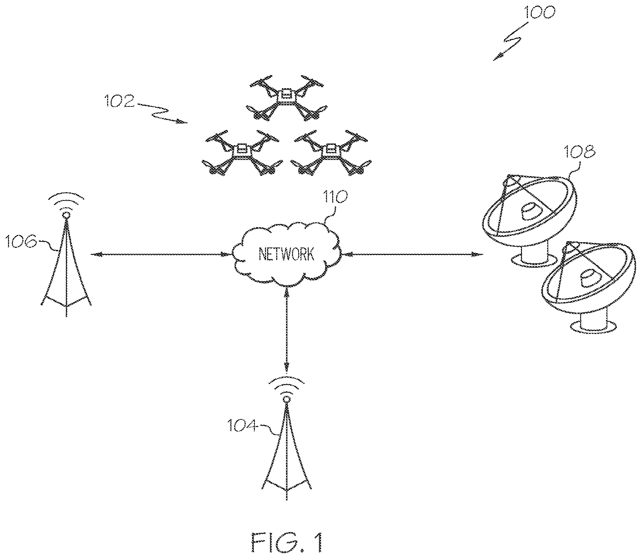

FIG. 1 depicts an example system 100 for correlating air surveillance data from multiple sensors. In the example of FIG. 1, a plurality of UAS 102 (e.g., drones) flying in certain airspace are monitored by a surveillance service provider 104 such as a USS and/or a surveillance supplementary data service provider (SDSP). Specifically, the positions of each of the UAS 102 are to be tracked by the surveillance service provider 104. However, it should be understood that in other examples, the system 100 may track manned aircraft or other types of aerial vehicles and may include tracking systems other than a USS (e.g., a traditional air traffic control system).

The system 100 may include a plurality of surveillance instruments or sensors. The system 100 may include one or more cooperative sensors and/or one or more non-cooperative sensors. Cooperative sensors rely on cooperative targets that identify themselves, such as or automatic dependent surveillance-broadcast (ADS-B). As such, cooperative sensors are able to establish an identity of a target being tracked. Alternatively, non-cooperative sensors do not communicate with the target and are unable to directly establish an identify of a target.

In the example of FIG. 1, the system 100 includes a first sensor 106 and a second sensor 108. Each of the first and second sensors 106, 108 may track the positions of the UAS 102 and/or other targets and transmit air surveillance data to the surveillance service provider 104. Each of the first and second sensors 106, 108 may comprise a variety of sensors or surveillance instruments including ground-based primary radar, ADS-B receivers, cellular data receivers, receivers that receive GPS data from the UAS 102 (including but not limited to Remote ID, or UTM provided telemetry data), SSR/MLAT systems, or any other electro-optic or other types of sensors that can track the positions of the UAS 102. Each of the first and second sensors 106, 108 may comprise cooperative or non-cooperative sensors. While the example of FIG. 1 shows a first sensor 106 and a second sensor 108, it should be understood that, in other examples, the system 100 may include any number of sensors that track the positions of the UAS 102 and transmit data to the surveillance service provider 104.

In the example of FIG. 1, the first and second sensors 106, 108 transmit data to the surveillance service provider 104 over a network 110. As such, the network 110 may introduce latency and drop-outs. This may introduce error into the data received by the surveillance service provider 104 from the first and second sensors 106, 108. The disclosed techniques for correlating data from multiple sensors may allow the surveillance service provider 104 to accurately track the UAS 102 despite the error introduced by the network 110 as well as other sources of error.

The surveillance service provider 104 may receive surveillance data from the first sensor 106 and the second sensor 108. The data received by the surveillance service provider 104 from the first and second sensors 106, 108 may include positions of the UAS 102 measured by each of the sensors 106, 108. In embodiments, the data received by the surveillance service provider 104 from the first and second sensors 106, 108 comprises a formed target track rather than raw detection data. That is, each of the first and second sensors 106, 108 transmits, to the surveillance service provider 104, a track of a detected object comprising a plurality of recently detected positions of the object. If a sensor is tracking multiple objects, the sensor may transmit multiple tracks corresponding to the multiple objects to the surveillance service provider 104.

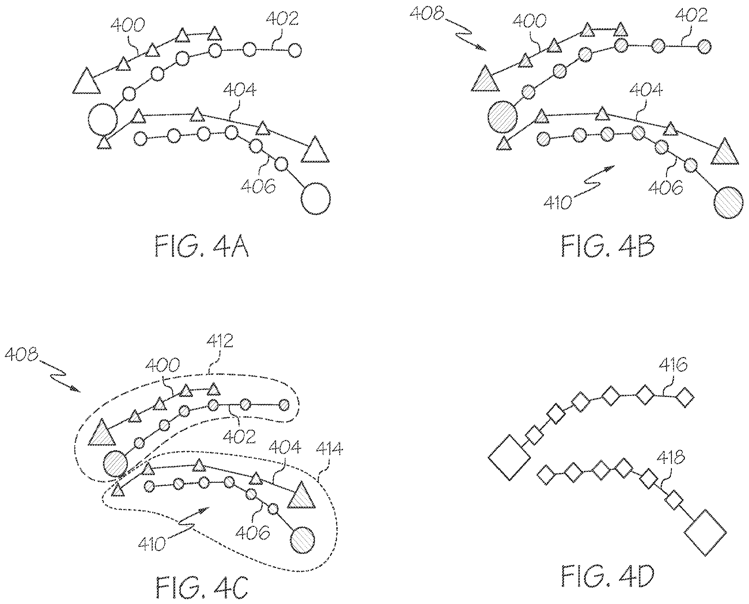

For example, FIG. 4A shows two tracks 400, 404 that may be transmitted by the first sensor 106 and two tracks 402, 406 that may be transmitted by the second sensor 108. In the example of FIG. 4A, the track transmitted by the first sensor 106 comprises the five most recent positions of a target and the track transmitted by the second sensor 108 comprises the seven most recent positions of a target. However, it should be understood that in other examples, sensors may transmit tracks comprising any number of recent positions of a target.

The surveillance service provider 104 may combine the data received from the first and second sensors 106, 108 to determine accurate positions of the UAS 102, using the techniques described herein. In some examples, the surveillance service provider 104 may receive data directly from the UAS 102.

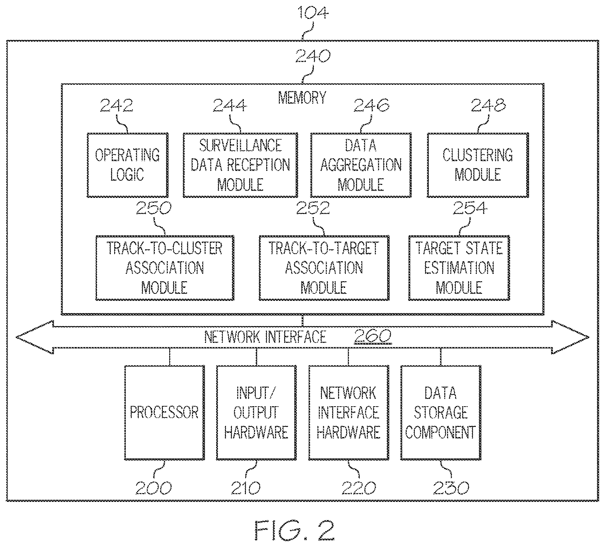

Now referring to FIG. 2, components of the surveillance service provider 104 are schematically depicted. In the illustrated example, the surveillance service provider 104 comprises a server computing device. However, in other examples, the surveillance service provider 104 may be any type of computing device (e.g., mobile computing device, personal computer, etc.). Additionally, while the surveillance service provider 104 is depicted in FIG. 2 as a single piece of hardware, this is also merely an example. More specifically, the surveillance service provider 104 may represent a plurality of computers, servers, databases, etc. In some examples, the surveillance service provider 104 may be configured as a general-purpose computer with the requisite hardware, software, and/or firmware. In other examples, the surveillance service provider 104 may be configured as a collection of cooperating computing devices or even as a special purpose computer designed specifically for performing the functionality described herein.

As illustrated in FIG. 2, the surveillance service provider 104 may include a processor 200, input/output hardware 210, network interface hardware 220, a data storage component 230, and a non-transitory memory component 240. The memory component 240 may be configured as volatile and/or nonvolatile computer readable medium and, as such, may include random access memory (including SRAM, DRAM, and/or other types of random access memory), flash memory, registers, compact discs (CD), digital versatile discs (DVD), and/or other types of storage components. Additionally, the memory component 240 may be configured to store operating logic 242, a surveillance data reception module 244, a data aggregation module 246, a clustering module 248, a track-to-cluster association module 250, a track-to-target association module 252, and a target state estimation module 254 (each of which may be embodied as a computer program, firmware, or hardware, as an example). A network interface 260 is also included in FIG. 2 and may be implemented as a bus or other interface to facilitate communication among the components of the surveillance service provider 104.

The processor 200 may include any processing component configured to receive and execute instructions (such as from the data storage component 230 and/or the memory component 240). The input/output hardware 210 may include a monitor, keyboard, mouse, printer, camera, microphone, speaker, touch-screen, and/or other device for receiving from, and sending data to the surveillance service provider 104. The network interface hardware 220 may include any wired or wireless networking hardware, such as a modem, LAN port, wireless fidelity (Wi-Fi) card, WiMax^{™} card, mobile communications hardware, and/or other hardware for communicating with the first and second sensors 106, 108, the UAS 102, and other networks and/or devices.

The data storage component 230 may store surveillance data received from the sensors 106, 108 (e.g., previous tracked positions of the UAS 102). By storing sensor data received from the sensors 106, 108, the surveillance service provider 104 may analyze tracks of the various UAS 102. As used herein, a track comprising a sequence of measured positions of a target. The use of the track data stored in the data storage component 230 is discussed in further detail below.

Included in the memory component 240 are operating logic 242, the surveillance data reception module 244, the data aggregation module 246, the clustering module 248, the track-to-cluster association module 250, the track-to-target association module 252, and the target state estimation module 254. The operating logic 242 may include an operating system and/or other software for managing components of the surveillance service provider 104.

The surveillance data reception module 244 may receive data from the first and second sensors 106, 108. In examples comprising additional sensors, the surveillance data reception module 244 may receive data from additional sensors as well. The data received by the surveillance data reception module 244 may comprise positions of one or more targets (e.g., the UAS 102) tracked by the first and second sensors 106, 108. As explained above, the data transmitted by the first and second sensors 106, 108 may comprise tracks of targets. As such, the surveillance data reception module 244 may receive tracks of targets. The received data may also comprise a time stamp associated with each data point (e.g., each detected position of a target). After receiving surveillance data, the surveillance data reception module 244 may store the received data in the data storage component 230.

The data aggregation module 246 aggregates data from all of the tracks received by the surveillance data reception module 244 up to a certain predetermined threshold duration in the past (e.g., five seconds). That is, all received positions for all tracks within the threshold duration are combined. The aggregated data may include time stamps, target locations, target altitudes, velocity, bearings or headings, and the like. FIG. 4A shows an example aggregation of tracks 400, 402, 404, and 406 that may be performed by the data aggregation module 246. In the example of FIG. 4A, the tracks 400 and 402 represent tracks of a first target detected by the first and second sensors 106, 108, respectively and the tracks 404, 406 represent tracks of a second target detected by the first and second sensors 106, 108, respectively. Because of noise, measurement error, or other factors, the tracks 400 and 402 are slightly different even though they represent the same target. Similarly, the tracks 404 and 406 are slightly different from each other despite representing the same target. As such, the techniques described herein allow the surveillance service provider 104 to determine a single track for each of the two targets being tracked.

Referring back to FIG. 2, the clustering module 248 performs density-based clustering of the data aggregated by the data aggregation module 246. The clustering is performed for all positions of all tracks aggregated by the data aggregation module 246. In one example, the clustering module 248 uses the known density-based spatial clustering of applications with noise (DBSCAN) data clustering algorithm. In other examples, the clustering module 248 may use other clustering algorithms. Specifically, the clustering module 248 analyzes the positions of the UAS 102 within a certain threshold duration aggregated by the data aggregation module 246 and groups them into a plurality of clusters based on their density using unsupervised learning techniques. Density and/or distance metrics for the clustering algorithm may be determined from sensor characteristics (e.g., error standard deviation) and/or user input.

FIG. 4B shows an example clustering performed by the clustering module 248 on the tracks 400, 402, 404, and 406. As can be seen in FIG. 4B, the clustering module 248 has found two clusters 408 and 410 based on the tracks 400, 402, 404, 406. For example, cluster 408 includes all the positions from tracks 400 and 402 as well as the two most recent positions from track 404 and the most recent position from track 406. For example, cluster 410 includes the earliest three positions from track 404 and the earliest six positions from track 406. Thus, the clusters 408 and 410 do not exactly match the positions of the first and second targets tracked by the first and second sensors 106, 108. The remaining techniques described below attempt to resolve this difference.

Referring back to FIG. 2, the track-to-cluster association module 250 creates candidate track-to-cluster associations for each track received by the surveillance data reception module 244. That is, the track-to-cluster association module 250 determines possible associations between the tracks received by the surveillance data reception module 244 and the clusters determined by the clustering module 248. The track-to-cluster association module 250 then ranks the candidate track-to-cluster associations based on the clustering performed by the clustering module 248. Specifically, the track-to-cluster association module 250 may rank a track-to-cluster association higher when there are more elements of the cluster in the track. For example, as shown in FIG. 4C, all five positions of track 400 and all seven positions of track 402 are included in cluster 408, whereas only two of the five points of track 404 and one of seven points of track 406 are included in cluster 408. Thus, the track-to-cluster association module 250 may rank an association between track 400 and cluster 408 higher than other associations for track 400. Similarly, the track-to-cluster association module 250 may rank associations between track 402 and cluster 408, track 404 and cluster 410, and track 406 and cluster 410 higher than other associations for tracks 402, 404, and 406.

Referring back to FIG. 2, the track-to-target association module 252 associates certain tracks received from different sensors as corresponding to the same target based on the ranking of the candidate track-to-cluster associations determined by the track-to-cluster association module 250. The track-to-target association module 252 may also associate tracks with targets based on other rules. For example, for cooperative sensors, each track may be associated with an ID of a particular target. Thus, the track-to-target association module 252 may exclude tracks received from cooperative sensors from targets that do not match that ID of the target received from the cooperative sensor.

In the example of FIG. 4C, the track-to-target association module 252 associates tracks 400 and 402 with a first target, as shown by grouping 412. The track-to-target association module 252 further associates tracks 404 and 406 with a second target, as shown by grouping 414. These associations may be made based on the associations made by the track-to-cluster association module 250 and the rankings thereof discussed above.

Referring back to FIG. 2, the target state estimation module 254 estimates a target state (as a single track) for each target detected by the first and second sensors 106, 108 by combining the tracks associated with the target by the track-to-target association module 252. For example, in the example of FIG. 4C, the target state estimation module 254 may combine the tracks 400 and 402 of grouping 412 into a single track for a first target and may combine the tracks 404 and 406 of grouping 414 into a single track for a second target.

The target state estimation module 254 may use a variety of techniques to combine multiple tracks correlated together into a single track. In one example, the target state estimation module 254 may select the track from a preferred sensor as the state estimate for the target. In another example, the target state estimation module 254 may use a Kalman filter to determine a state estimate track for the target based on the tracks associated with the target. In another example, the target state estimation module 254 may use the known Covariance intersection algorithm to combine the tracks associated with a target into a single state estimate track. In another example, the target state estimation module 254 may use particle filtering to combine the tracks associated with a target into a single state estimate track. In other examples, the target state estimation module 254 may use other techniques to combine multiple tracks associated with a target into a single state estimate track for the target.

It should be understood that the components illustrated in FIG. 2 are merely illustrative and are not intended to limit the scope of this disclosure. More specifically, while the components in FIG. 2 are illustrated as residing within the surveillance service provider 104, this is a nonlimiting example. In some embodiments, one or more of the components may reside external to the surveillance service provider 104.

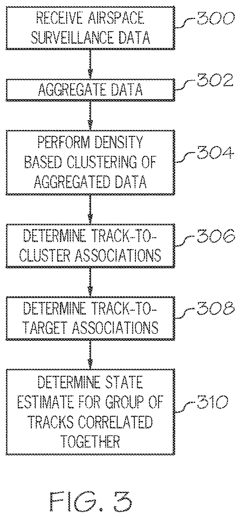

As mentioned above, the various components described with respect to FIG. 2 may be used to correlate airspace surveillance data from multiple sensors. An illustrative example of the various processes is described with respect to FIG. 3. Although the steps associated with the blocks of FIG. 3 will be described as being separate tasks, in other embodiments, the blocks may be combined or omitted. Further, while the steps associated with the blocks of FIG. 3 will be described as being performed in a particular order, in other embodiments, the steps may be performed in a different order.

Referring now to FIG. 3, a flow chart is shown for correlating airspace surveillance data from multiple sensors, according to one or more embodiments shown and described herein. At step 300, the surveillance data reception module 244 receives surveillance data from a plurality of sensors. The received sensor data may comprise a track comprising a plurality of recently detected positions of a target. After receiving the airspace surveillance data, the surveillance data reception module 244 may store the data in the data storage component 230.

At step 302, the data aggregation module 246 aggregates the data received by the surveillance data reception module 244. The data aggregation module 246 may aggregate received tracks comprising positions of targets within a threshold duration into the past.

At step 304, the clustering module 248 performs density-based clustering of the data aggregated by the data aggregation module 246. In some examples, the clustering module 248 may use the DBSCAN clustering algorithm. In other examples, the clustering module 248 may use other clustering algorithms to perform clustering.

At step 306, the track-to-cluster association module 250 creates a plurality of candidate associations between tracks received by the surveillance data reception module 244 and clusters determined by the clustering module 248. The track-to-cluster association module 250 further ranks the candidate associations based on the number elements from a track in a cluster.

At step 308, the track-to-target association module 252 associates each track received by the surveillance data reception module 244 to a target based on the ranking of track to cluster associations performed by the track-to-cluster association module 250. The track-to-target association module 252 may also determine the association between tracks and targets based on other rules such as ID-based exclusion for tracks received from cooperative sensors.

At step 310, the target state estimation module 254 determines a state estimate comprising a single track for each target associated with one or more tracks by the track-to-target association module 252. The target state estimation module 254 may use a variety of techniques to fuse multiple tracks associated with a target into a single track including selecting a track from a preferred sensor or using techniques such as Kalman filtering or covariance intersection. The method of FIG. 3 may be repeated either on an event basis (e.g., when there are diverging tracks for a single target) and/or periodically to account for new sensor data.

It should now be understood that the devices, systems, and methods described herein allow multi-sensor correlation of airspace surveillance data. A USS may receive airspace surveillance data from multiple sensors. The airspace surveillance data may comprise one or more tracks associated with one or more targets comprising recently detected positions of the one or more targets. The USS may aggregate the received data including all detected positions of targets within a threshold distance into the past.

The USS may then perform density-based clustering of the aggregated data. The USS may determine candidate track-to-cluster associations for the aggregated data and may rank each of the candidate track-to-cluster associations based on the number of elements from a track in a cluster. The greater the number of elements of a track that are in a cluster for a candidate association, the higher the rank of that association.

The USS may then perform track-to-target associations by associating each track with a target based on the ranking of the track-to-cluster associations. The USS may then determine a state estimate comprising a single estimated track for each target associated with one or more tracks.

While particular embodiments have been illustrated and described herein, it should be understood that various other changes and modifications may be made without departing from the scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

## Claims

1. A computer-implemented method comprising:
receiving (300) airspace surveillance data from a plurality of sensors, the airspace surveillance data comprising tracks associated with one or more targets, wherein the tracks comprise recent positions of the one or more targets measured by the plurality of sensors;
aggregating (302) the airspace surveillance data received up to a certain predetermined threshold duration in the past to obtain aggregated data, wherein the aggregated data combines all positions of all tracks within the predetermined threshold duration;
performing (304) density-based clustering of the aggregated data to obtain a plurality of clusters;
determining (306) one or more candidate track-to-cluster associations between the tracks and the clusters, wherein the candidate track-to-cluster associations are ranked according to the number of target positions from a track that are included in a cluster;
associating (308) each of the tracks with one of the one or more targets based on the ranking of the candidate track-to-cluster associations; and
estimating (310) a state for each of the one or more targets by fusing the tracks associated with the same one or more targets into a single track.

2. The method of claim 1, further comprising performing the density-based clustering of the aggregated data using DBSCAN clustering algorithm.

3. The method of any preceding claim, wherein the airspace surveillance data from at least one of the plurality of sensors comprises cooperative sensor data that identifies a target associated with the cooperative sensor data; and
the method further comprises associating each of the tracks with a target based at least in part on the identification of the target associated with the cooperative sensor data.

4. The method of any preceding claim, further comprising estimating the state for each of the one or more targets based on the airspace surveillance data received from a preferred sensor of the plurality of sensors.

5. The method of any preceding claim, further comprising estimating the state for each of the one or more targets based on a Kalman filter.

6. The method of any preceding claim, further comprising estimating the state for each of the one or more targets based on covariance intersection of the tracks associated with each target.

7. The method of any preceding claim, further comprising estimating the state for each of the one or more targets based on a particle filter.

8. An apparatus comprising:
one or more processors (200);
one or more memory modules (240); and
machine-readable instructions stored in the one or more memory modules that, when executed by the one or more processors, cause the apparatus to carry out the method of claim 1.

9. The apparatus of claim 8, wherein:
the airspace surveillance data from at least one of the plurality of sensors comprises cooperative sensor data that identifies a target associated with the cooperative sensor data; and
the instructions, when executed by the one or more processors, further cause the apparatus to associate each track with a target based at least in part on the identification of the target associated with the cooperative sensor data.

10. The apparatus of claim 8 or 9, wherein the instructions, when executed by the one or more processors, cause the apparatus to estimate the state for each of the one or more targets based on the airspace surveillance data received from a preferred sensor of the plurality of sensors.

## Patentansprüche

1. Computerimplementiertes Verfahren, umfassend:
Empfangen (300) von Luftraumüberwachungsdaten von einer Vielzahl von Sensoren, wobei die Luftraumüberwachungsdaten mit einem oder mehreren Zielen verknüpfte Bahnen umfassen, wobei die Bahnen die jüngsten von der Vielzahl von Sensoren gemessenen Positionen des einen oder der mehreren Ziele umfassen;
Aggregieren (302) der bis zu einer bestimmten vorgegebenen Schwellendauer in der Vergangenheit empfangenen Luftraumüberwachungsdaten, um aggregierte Daten zu erhalten, wobei die aggregierten Daten alle Positionen aller Bahnen innerhalb der vorgegebenen Schwellendauer kombinieren;
Durchführen (304) einer dichtebasierten Clusterung der aggregierten Daten, um eine Vielzahl von Clustern zu erhalten;
Bestimmen (306) einer oder mehrerer möglicher Bahn-Cluster-Assoziationen zwischen den Bahnen und den Clustern, wobei die möglichen Bahn-Cluster-Assoziationen nach der Anzahl der Zielpositionen einer Bahn, die in einem Cluster enthalten sind, eingestuft werden;
Zuordnen (308) jeder der Bahnen zu einem der einen oder mehreren Ziele auf der Grundlage der Rangfolge der möglichen Bahn-Cluster-Zuordnungen; und
Einschätzen (310) eines Zustands für jedes der einen oder mehreren Ziele durch Zusammenführen der mit denselben einem oder mehreren Zielen verknüpften Bahnen zu einer einzigen Bahn.

2. Verfahren nach Anspruch 1, ferner umfassend Durchführen der dichtebasierten Clusterung der aggregierten Daten unter Verwendung des DBSCAN-Clusterungsalgorithmus umfasst.

3. Verfahren nach einem der vorstehenden Ansprüche, wobei die Luftraumüberwachungsdaten von mindestens einem der Vielzahl von Sensoren kooperative Sensordaten umfassen, die ein mit den kooperativen Sensordaten verknüpftes Ziel identifizieren; und
das Verfahren ferner das Zuordnen jeder der Bahnen zu einem Ziel umfasst, zumindest teilweise basierend auf der Identifikation des Ziels, das den kooperativen Sensordaten zugeordnet ist.

4. Verfahren nach einem der vorstehenden Ansprüche, ferner umfassend das Einschätzen des Zustands für jedes der einen oder mehreren Ziele auf der Grundlage der von einem bevorzugten Sensor der Vielzahl von Sensoren empfangenen Luftraumüberwachungsdaten.

5. Verfahren nach einem der vorstehenden Ansprüche, ferner umfassend das Einschätzen des Zustands für jedes der einen oder mehreren Ziele auf der Grundlage eines Kalman-Filters.

6. Verfahren nach einem der vorstehenden Ansprüche, ferner umfassend das Einschätzen des Zustands für jedes der einen oder mehreren Ziele auf der Grundlage der Kovarianzschnittpunkte der mit jedem Ziel verknüpften Bahnen.

7. Verfahren nach einem der vorstehenden Ansprüche, ferner umfassend das Einschätzen des Zustands für jedes der einen oder mehreren Ziele auf der Grundlage eines Partikelfilters.

8. Vorrichtung, umfassend:
einen oder mehrere Prozessoren (200);
eine oder mehrere Speichermodule (240); und
maschinenlesbare Anweisungen, die in einem oder mehreren Speichermodulen gespeichert sind und die, wenn sie von einem oder mehreren Prozessoren ausgeführt werden, bewirken, dass die Vorrichtung das Verfahren nach Anspruch 1 ausführt.

9. Vorrichtung nach Anspruch 8, wobei:
die Luftraumüberwachungsdaten von mindestens einem der Vielzahl von Sensoren kooperative Sensordaten umfassen, die ein mit den kooperativen Sensordaten verknüpftes Ziel identifizieren; und
die Anweisungen, wenn sie von dem einem oder den mehreren Prozessoren ausgeführt werden, ferner die Vorrichtung veranlassen, jede Bahn zumindest teilweise auf Grundlage der Identifikation des Ziels, das mit den kooperativen Sensordaten verknüpft ist, einem Ziel zuzuordnen.

10. Vorrichtung nach Anspruch 8 oder 9, wobei die Anweisungen, wenn sie von einem oder mehreren Prozessoren ausgeführt werden, die Vorrichtung veranlassen, den Zustand für jedes der einen oder mehreren Ziele basierend auf den von einem bevorzugten Sensor der Vielzahl von Sensoren empfangenen Luftraumüberwachungsdaten einzuschätzen.

## Revendications

1. Procédé implémenté par ordinateur comprenant :
la réception (300) de données de surveillance de l'espace aérien provenant d'une pluralité de capteurs, les données de surveillance de l'espace aérien comprenant des traces associées à une ou plusieurs cibles, dans lequel les traces comprend les positions récentes de la ou des cibles mesurées par la pluralité de capteurs ;
l'agrégation (302) des données de surveillance de l'espace aérien reçues jusqu'à un certain seuil prédéterminé dans le passé pour obtenir des données agrégées, dans lequel les données agrégées combinent toutes les positions de toutes les pistes dans le seuil prédéterminé ;
le fait d'effectuer (304) un regroupement basé sur la densité des données agrégées afin d'obtenir une pluralité de regroupements ;
la détermination (306) d'une ou plusieurs associations piste-groupe candidates entre les pistes et les groupes, dans lequel les associations piste-groupe candidates sont classées en fonction du nombre de positions cibles d'une piste qui sont incluses dans un groupe ;
l'association (308) de chacune des pistes à une ou plusieurs cibles sur la base du classement des associations piste-groupe candidates ; et
l'estimation (310) d'un état pour chacune des une ou plusieurs cibles en fusionnant les pistes associées à la même ou les mêmes cibles en une seule piste.

2. Procédé selon la revendication 1, comprenant en outre à effectuer le regroupement basé sur la densité des données agrégées à l'aide de l'algorithme de regroupement DBSCAN.

3. Procédé selon l'une quelconque revendication précédente, dans lequel les données de surveillance de l'espace aérien provenant d'au moins un des capteurs comprennent des données de capteurs coopératifs qui identifient une cible associée aux données de capteurs coopératifs ; et
le procédé comprend en outre à associer chacune des pistes à une cible sur la base, au moins en partie, de l'identification de la cible associée aux données des capteurs coopératifs.

4. Procédé selon l'une quelconque revendication précédente, comprenant en outre l'estimation de l'état de chacune des une ou plusieurs cibles sur la base des données de surveillance de l'espace aérien reçues d'un capteur préféré de la pluralité de capteurs.

5. Procédé selon l'une quelconque revendication précédente, comprenant en outre l'estimation de l'état de chacune des une ou plusieurs cibles sur la base d'un filtre de Kalman.

6. Procédé selon l'une quelconque revendication précédente, comprenant en outre l'estimation de l'état de chacune des une ou plusieurs cibles sur la base de l'intersection de la covariance des pistes associées à chaque cible.

7. Procédé selon l'une quelconque revendication précédente, comprenant en outre l'estimation de l'état de chacune des une ou plusieurs cibles sur la base d'un filtre à particules.

8. Appareil comprenant :
un ou plusieurs processeurs (200) ;
un ou plusieurs modules de mémoire (240) ; et
des instructions lisibles par machine stockées dans un ou plusieurs modules de mémoire qui, lorsqu'elles sont exécutées par un ou plusieurs processeurs, amènent l'appareil à réaliser le procédé selon la revendication 1.

9. Appareil selon la revendication 8, dans lequel :
les données de surveillance de l'espace aérien provenant d'au moins un des capteurs comprennent des données de capteurs coopératifs qui identifient une cible associée aux données de capteurs coopératifs ; et
les instructions, lorsqu'elles sont exécutées par un ou plusieurs processeurs, amènent en outre l'appareil à associer chaque piste à une cible sur la base d'au moins en partie sur l'identification de la cible associée aux données des capteurs coopératifs.

10. Appareil selon la revendication 8 ou 9, dans lequel les instructions, lorsqu'elles sont exécutées par un ou plusieurs processeurs, amènent l'appareil à estimer l'état de chacune des cibles sur la base des données de surveillance de l'espace aérien reçues d'un capteur privilégié de la pluralité de capteurs.
